# EUROPÄISCHE PATENTANMELDUNG

(11) **EP 3 569 999 A1**
(43) Veröffentlichungstag der Anmeldung: **20.11.2019**
(21) Anmeldenummer: 19161502.0
(22) Anmeldetag: 08.03.2019
(51) Int. Cl.: G01M 15/02, G01M 15/04

(54) **DIAGNOSEGERÄT ZUR WARTUNG VON ZUM ANTREIBEN VON LANDWIRTSCHAFTLICHEN ARBEITSMASCHINEN VORGESEHENEN ANTRIEBSSYSTEMEN**

(30) Priorität: 14.05.2018 DE 102018111385
(71) Anmelder: CLAAS Selbstfahrende Erntemaschinen GmbH, 33428 Harsewinkel (DE)
(72) Erfinder: Thöle, Christoph, 49451 Holdorf (DE); Venherm, Patrick, 48336 Sassenberg (DE); Dasenbrock, Thilo, 49377 Vechta (DE)
(74) Vertreter: CLAAS Gruppe

(57) **Zusammenfassung**

Die vorliegende Erfindung betrifft ein Diagnosegerät zur Wartung von Antriebssystemen, die einen Verbrennungsmotor umfassen, in eine landwirtschaftliche Arbeitsmaschine eingebaut oder einbaubar sind, und zum Antreiben der landwirtschaftlichen Arbeitsmaschine vorgesehen sind, wobei das Diagnosegerät
• eine Gerätesteuerung zur Steuerung des Diagnosegerätes,
• eine Benutzerschnittstelle mit einer Anzeigeeinheit und einer Eingabeeinheit, sowie
• einen Datenspeicher zum Hinterlegen von Bildern und/oder Daten, umfasst,
wobei die Antriebssysteme jeweils aus einer Vielzahl von funktionalen Komponenten bestehen, deren Anzahl und Funktion von der Ausstattung des jeweiligen Antriebssystems, insbesondere vom Typ des Verbrennungsmotors, bestimmt sind, wobei im Datenspeicher zu jeder Komponente ein Bild hinterlegt ist, welches den Aufbau der Komponente schematisch wiedergibt, wobei die Gerätesteuerung dazu vorgesehen ist, in Abhängigkeit von einer Eingabe eines Monteurs an der Eingabeeinheit zumindest eine Komponente eines der Antriebssysteme an der Anzeigeeinheit darzustellen, und wobei
• das Diagnosegerät herstellerunabhängig, das heißt unabhängig vom Hersteller der Komponente und/oder der weiteren Komponenten des Antriebssystems, insbesondere unabhängig vom Hersteller des Verbrennungsmotors, und maschinenunabhängig, das heißt unabhängig von der landwirtschaftlichen Arbeitsmaschine, nutzbar ist, und
• das dargestellte Bild der Komponente herstellerunabhängig und/oder maschinenunabhängig ist.

## Beschreibung

Die vorliegende Erfindung betrifft ein Diagnosegerät zur Wartung von Antriebssystemen, die einen Verbrennungsmotor umfassen, in eine landwirtschaftliche Arbeitsmaschine eingebaut oder einbaubar sind, und zum Antreiben der landwirtschaftlichen Arbeitsmaschine vorgesehen sind, wobei das Diagnosegerät
- eine Gerätesteuerung zur Steuerung des Diagnosegerätes,
- eine Benutzerschnittstelle mit einer Anzeigeeinheit und einer Eingabeeinheit, sowie
- einen Datenspeicher zum Hinterlegen von Bildern und/oder Daten, umfasst,
wobei die Antriebssysteme jeweils aus einer Vielzahl von funktionalen Komponenten bestehen, deren Anzahl und Funktion von der Ausstattung des jeweiligen Antriebssystems, insbesondere vom Typ des Verbrennungsmotors, bestimmt sind, wobei im Datenspeicher zu jeder Komponente ein Bild hinterlegt ist, welches den Aufbau der Komponente schematisch wiedergibt, wobei die Gerätesteuerung dazu vorgesehen ist, in Abhängigkeit von einer Eingabe eines Monteurs an der Eingabeeinheit zumindest eine Komponente eines der Antriebssysteme an der Anzeigeeinheit darzustellen.

In aktuellen Antriebssystemen mit Verbrennungsmotor werden die Komponenten miteinander vernetzt, um den Verbrennungsmotor optimal steuern zu können. Dafür werden die Antriebssysteme gezielt mit Sensoren und Aktoren versehen, mit denen ihr Zustand messbar und mittels der Aktoren änderbar ist. Zu Versuchs- und Wartungszwecken sehen solche Antriebssysteme eine Kommunikationsschnittstelle vor, die für eine Diagnose des Antriebssystems genutzt wird und häufig einen Zugriff auf die Aktoren ermöglicht, so dass diese ansteuerbar sind. Jedoch sind weder die in den Antriebssystemen genutzten Datenbusse einheitlich, noch die Kommunikationsschnittstelle, noch die für die Kommunikation genutzten Protokolle. In Abhängigkeit vom Hersteller des Verbrennungsmotors und/oder der weiteren Komponenten des Antriebssystems ist daher eine Vielzahl von Diagnosegeräten für eine solche Diagnose erhältlich. Für einen Monteur erfordert die Vielzahl der Geräte einen erheblichen Einarbeitungsaufwand.

Aufgabe der vorliegenden Erfindung ist es, ein Diagnosegerät zur Wartung von Antriebssystemen zur Verfügung zu stellen, dass für einen Monteur, insbesondere einen mit der Wartung einer landwirtschaftlichen Arbeitsmaschine beauftragten Monteur, leicht handhabbar ist, und mit dem er sich sehr einfach und schnell eine gute Übersicht über das Antriebssystem und dessen Zustand verschaffen kann.

Die Aufgabe wird gelöst mit einem Diagnosegerät mit den Merkmalen des unabhängigen Patentanspruchs 1. Vorteilhafte Ausführungsformen sind den abhängigen Ansprüchen entnehmbar.

Dafür wird ein Diagnosegerät zur Wartung von Antriebssystemen geschaffen, wobei die Antriebssysteme einen Verbrennungsmotor umfassen und zum Antreiben landwirtschaftlicher Arbeitsmaschinen vorgesehen sind. Solche landwirtschaftlichen Arbeitsmaschinen sind bevorzugt selbstfahrende landwirtschaftliche Arbeitsmaschinen, insbesondere Mähdrescher, Feldhäcksler, Traktoren, Futtererntemaschinen, Frontlader oder weitere landwirtschaftliche Arbeitsmaschinen mit einem solchen Antriebssystem.

Das Diagnosegerät umfasst
- eine Gerätesteuerung zur Steuerung des Diagnosegerätes,
- eine Benutzerschnittstelle mit einer Anzeigeeinheit und einer Eingabeeinheit, sowie
- einen Datenspeicher zum Hinterlegen von Bildern und/oder Daten.

Die im Datenspeicher hinterlegten Daten können Messdaten, Referenzdaten, für Wartungstests benötigte Wartungsdaten und/oder weitere Daten sein.

Die Antriebssysteme bestehen jeweils aus einer Vielzahl von funktionalen Komponenten, deren Anzahl und Funktion von der Ausstattung des jeweiligen Antriebssystems bestimmt sind. Beispielsweise bestimmt vor allem der Verbrennungsmotor die Anzahl und Funktion der Komponenten des jeweiligen Antriebssystems mit.

Im Datenspeicher ist zu jeder Komponente ein Bild hinterlegt, welches den Aufbau der Komponente schematisch wiedergibt. Dabei umfasst der Begriff der schematischen Wiedergabe der Komponente hier eine Darstellung der Komponente in einer typischen, für den Fachmann erkennbaren, an das Aussehen und/oder die Funktion der Komponente angelehnten, gegebenenfalls vereinfachten Kontur.

Die Gerätesteuerung des Diagnosegerätes ist dazu vorgesehen, in Abhängigkeit von einer Eingabe eines Monteurs an der Eingabeeinheit zumindest eine Komponente eines der Antriebssysteme an der Anzeigeeinheit darzustellen.

Das Diagnosegerät zeichnet sich dadurch aus, dass
- das Diagnosegerät herstellerunabhängig, das heißt unabhängig vom Hersteller der Komponente und/oder der weiteren Komponenten des Antriebssystems, insbesondere unabhängig vom Hersteller des Verbrennungsmotors, und maschinenunabhängig, das heißt unabhängig von der landwirtschaftlichen Arbeitsmaschine, nutzbar ist, und
- das dargestellte Bild der Komponente herstellerunabhängig und maschinenunabhängig ist.

Erfindungsgemäß ist das Diagnosegerät herstellerunabhängig und maschinenunabhängig nutzbar. Der Monteur benötigt daher nur dieses eine Diagnosegerät für eine Vielzahl von Antriebssystemen verschiedener Hersteller und für eine Vielzahl verschiedener landwirtschaftlicher Arbeitsmaschinen. Eine Einarbeitung in eine Vielzahl verschiedener Diagnosegeräte ist für den Monteur daher nicht erforderlich.

Am Diagnosegerät wird außerdem in Abhängigkeit von der Ausstattung des Antriebssystems ein Bild der Komponenten dargestellt. Erfindungsgemäß ist auch das Bild hersteller- und maschinenunabhängig. Bei gleicher Ausstattung zweier Antriebssysteme sind die an der Anzeige des Diagnosegerätes dargestellten Bilder der Komponenten der Antriebssysteme daher gleich, auch wenn ein oder mehrere Komponenten der Antriebssysteme, insbesondere der Verbrennungsmotor, von verschiedenen Herstellern gefertigt sind. Weiterhin sind sie auch dann gleich, wenn zudem die beiden Antriebssysteme in verschiedene landwirtschaftliche Arbeitsmaschinen eingebaut sind. Dies gilt vor allem auch für Antriebssysteme mit Verbrennungsmotoren verschiedener Hersteller. Denn die Bilder ausstattungsgleicher Komponenten sind auch für Antriebssysteme mit Verbrennungsmotoren verschiedener Hersteller gleich.

Weiterhin bevorzugt ist das dargestellte Bild zudem bei funktionsgleichen Komponenten vom Modell der Komponente unabhängig. Sofern mehrere Antriebssysteme funktionsgleiche Komponenten verschiedener Hersteller und/oder verschiedener Modelle aufweisen, insbesondere Verbrennungsmotoren verschiedener Hersteller und/oder verschiedener Modelle, ist das dargestellte Bild daher gleich.

Da für Komponenten verschiedener Hersteller und verschiedener landwirtschaftlicher Arbeitsmaschinen gleiche Bilder genutzt werden, kann sich ein mit der Wartung des Antriebssystems beauftragter Monteur trotz der enormen Vielzahl von am Markt befindlichen Antriebssystemen, trotz der Vielzahl der Hersteller und trotz der vielen verschiedenen landwirtschaftlichen Arbeitsmaschinen mit diesem Diagnosegerät sehr schnell einen Überblick über den Zustand des Antriebssystems verschaffen, und zwar auch dann, wenn er dieses Antriebssystem erstmalig wartet und/oder erstmalig an dieser landwirtschaftlichen Arbeitsmaschine arbeitet. Denn trotz der für den Monteur möglicherweise ungewohnten Arbeitsumgebung ermöglichen die wiederkehrenden, an das Aussehen und/oder die Funktion der Komponenten angelehnten Bilder ein schnelles Auffinden der relevanten Informationen. Dadurch vereinfacht sich die Wartung für den Monteur erheblich, und die Wartung ist für ihn insgesamt schneller durchführbar.

Dabei ist die Ausstattung des jeweiligen Antriebssystems vom Typ des Verbrennungsmotors, nämlich vom Typ Dieselmotor oder vom Typ Benzinmotor, und/oder von seiner Ausstattung abhängig, so dass die Anzahl und Funktion der dargestellten Komponenten in einer vorteilhaften Ausführungsform des Diagnosegerätes vom Typ des Verbrennungsmotors mitbestimmt ist.

So kann beispielsweise die zum Ableiten der bei der Verbrennung des Kraftstoffs entstehenden Abgase in die Umgebung vorgesehene Abgasnachbehandlung eines Verbrennungsmotors vom Typ Dieselmotor einen SCR Katalysator (SCR: Selective Catalytic Reduction, selektive katalytische Reduktion) umfassen, oder sowohl mit dem SCR Katalysator als auch mit einer DPF Regeneration (DPF: Dieselpartikelfilter) ausgestattet sein. Um die Funktion des SCR Katalysators richtig zu gewährleisten, verfügen solche Abgasnachbehandlungen regelmäßig über eine Harnstoffeinspritzung, die den Harnstoff vor dem oder in den SCR Katalysator einspritzen kann. Zudem können Dieselmotoren einen Dieseloxidationskatalysator (DOC) aufweisen, der vor dem SCR Katalysator angeordnet sein kann, aber von manchen Herstellern auch dahinter positioniert wird, um die Aufwärmdauer des SCR Katalysators zu verringern. Weiterhin kann ein Dieselmotor über eine Abgasrückführung verfügen.

Um den Zusammenhang zwischen den verschiedenen Komponenten des Antriebssystems übersichtlich darzustellen, und dem Monteur zu ermöglichen, sich sehr schnell einen guten Überblick zu verschaffen, ist es bevorzugt, dass die Gerätesteuerung dazu ausgebildet ist, gleichzeitig Bilder von mindestens zwei oder mehr, insbesondere miteinander verbundenen, Komponenten an der Anzeigeeinheit dazustellen. Diese Ausführungsform erleichtert das Verständnis der Zusammenhänge des Antriebssystems.

Dafür sieht das Diagnosegerät bevorzugt vor, die Bilder mehrerer Komponenten in einem themenbezogenen Gesamtbild darzustellen, wobei das Diagnosegerät für die Antriebssysteme jeweils zumindest ein Gesamtbild zu den Themen Abgasnachbehandlung, Einspritzsystem und Motorregelung umfasst. In Abhängigkeit von der Ausstattung des Antriebssystems können zu demselben Thema auch mehrere Gesamtbilder vorgesehen sein. Ausstattungsabhängig können zudem weitere themenbezogene Gesamtbilder vorgesehen sein, insbesondere ein Gesamtbild zu dem Thema Abgasrückführung.

Dabei ist es weiterhin bevorzugt, dass das Bild einer vom Monteur durch eine Eingabe ausgewählten Komponente gegenüber dem Bild oder den Bildern der weiteren dargestellten Komponenten hervorgehoben ist. Auch dies erleichtert dem Monteur die Auffindbarkeit der relevanten Informationen während der Wartung.

Dabei ist in einer besonders bevorzugten Ausführungsform die Anordnung der Bilder der Komponenten im Gesamtbild an der Anzeigeeinheit unabhängig von der tatsächlichen Anordnung der Komponenten im Antriebssystem. Die Einspritzung des Harnstoffs wird beispielsweise immer vor dem SCR Katalysator dargestellt, auch wenn sie in dem Antriebssystem direkt in den SCR Katalysator hinein erfolgt. Dadurch wird die Varianz der dargestellten Bilder verringert und der Wiedererkennungswert für den Monteur erhöht.

Um ein in der landwirtschaftlichen Arbeitsmaschine eingebautes Antriebssystem unmittelbar an der landwirtschaftlichen Arbeitsmaschine warten zu können, ist es bevorzugt, dass das Diagnosegerät eine Kommunikationsschnittstelle zum Datenaustausch mit dem Antriebssystem umfasst. Das Diagnosegerät ist bevorzugt über die Kommunikationsschnittstelle an das Antriebssystem der landwirtschaftlichen Arbeitsmaschine anschließbar. Dabei kann es in der landwirtschaftlichen Arbeitsmaschine oder an einem entfernten Ort angeordnet sein.

In vorteilhafter Weise kann anschließend in Abhängigkeit von der Eingabe des Monteurs das Bild einer oder mehrerer Komponenten des Antriebssystems an der Anzeigeeinheit dargestellt werden.

Besonders bevorzugt ist die Kommunikationsschnittstelle zum kabelbehafteten und/oder kabellosen Verbinden mit einem Diagnosestecker der landwirtschaftlichen Arbeitsmaschine vorgesehen. Das kabelbehaftete Verbinden erfolgt bevorzugt über eine USB- Schnittstelle (Universal Serial Bus), das kabellose Verbinden vorzugsweise über eine WLAN- Schnittstelle (Wireless Local Area Network). Bevorzugt ist ebenfalls eine Verbindung des Diagnosegerätes mit dem Diagnosestecker der landwirtschaftlichen Arbeitsmaschine über ein Ethernet oder eine Mobilfunkschnittstelle.

Dabei ist es weiterhin bevorzugt, dass herstellerabhängige Informationen zum Datenaustausch zwischen dem Antriebssystem und dem Diagnosegerät, beispielsweise ein motorabhängiges Kommunikationsprotokoll, in einer Datenbank des Diagnosegerätes hinterlegt sind und bedarfsweise geladen werden. Eine Auswahl solcher Daten kann beispielsweise bei Auswahl der angeschlossenen landwirtschaftlichen Arbeitsmaschine erfolgen.

Um die Analyse des Antriebssystems zu ermöglichen, ist es bevorzugt, dass für in der Komponente angeordnete Sensoren und/oder Aktoren in dem Bild oder Gesamtbild jeweils ein Platzhalter vorgesehen ist, wobei die Gerätesteuerung dazu ausgebildet ist, die zu einem Messzeitpunkt erfassten Sensordaten und/oder Aktordaten am Ort des ihrem Sensor oder Aktor zugeordneten Platzhalters in dem Bild oder Gesamtbild darzustellen. In einer bevorzugten Ausführungsform ist der Platzhalter unabhängig von seiner tatsächlichen Position in der Komponente immer an demselben Ort im Bild oder Gesamtbild dargestellt. Vorzugsweise ist der Ort, an dem der Platzhalter für einen Sensor oder Aktor dargestellt ist, an einer für den Sensor oder Aktor typischen Position dargestellt. Dadurch kann der Monteur die Sensordaten und/oder Aktordaten zumindest teilweise schon allein aufgrund seiner Kenntnisse der Antriebssysteme zuordnen. Bevorzugt ist die Anordnung der Platzhalter vom Hersteller des Antriebssystems und der landwirtschaftlichen Arbeitsmaschine unabhängig. Dadurch ist die Auffindbarkeit der für den Monteur relevanten Sensordaten und/oder Aktordaten weiter vereinfacht.

Dafür ist es bevorzugt, dass die Gerätesteuerung dazu ausgebildet ist, über die Kommunikationsschnittstelle aktuell empfangene Sensordaten und/oder Aktordaten in dem Bild oder Gesamtbild darzustellen. Dies ermöglicht die Nutzung des Diagnosegerätes zu Wartungszwecken vor Ort. Das Diagnosegerät ist dann unmittelbar an die Kommunikationsschnittstelle der landwirtschaftlichen Arbeitsmaschine angeschlossen.

In einer bevorzugten Ausführungsform ist die Gerätesteuerung dazu ausgebildet, die zu einem Messzeitpunkt erfassten Sensordaten und/oder Aktordaten in dem ihnen zugeordneten Platzhalter in dem Bild oder Gesamtbild darzustellen. Der Monteur kann die für die Wartung relevanten Informationen dem Bild oder Gesamtbild daher unmittelbar entnehmen. Dabei ist es weiterhin bevorzugt, die Sensordaten und/oder Aktordaten in einem kontinuierlichen Zeitintervall zu aktualisieren. Ganz besonders bevorzugt werden die Sensordaten und/oder Aktordaten in Echtzeit, das heißt, immer dann, wenn ein neuer Messwert erfasst wird, aktualisiert. Dadurch gibt das dargestellte Bild der Komponente den Zustand des Antriebssystems aktuell wieder.

Um das Diagnosegerät möglichst vielseitig nutzen zu können, ist die Gerätesteuerung in Abhängigkeit von der Eingabe des Monteurs zudem dazu ausgebildet, in dem Datenspeicher hinterlegte, früher erfasste Sensordaten und/oder Aktordaten in dem Bild oder Gesamtbild darzustellen. Dies ermöglicht eine Analyse des Antriebssystems zu einem späteren Zeitpunkt nach einem Wartungstermin, insbesondere an einem entfernten Ort, beispielsweise an einem Büroarbeitsplatz des Monteurs. Die Daten können dann beispielsweise zu statistischen Zwecken ausgewertet werden.

Dabei können die im Bild oder Gesamtbild dargestellten Sensordaten und/oder Aktordaten entweder Referenzwerte, oder zu einem früheren Zeitpunkt gemessene oder aktuelle oder Echtzeitwerte, oder statistische Werte, insbesondere über mehrere Messwerte gemittelte Durchschnittswerte, sein.

Bevorzugt ist die Gerätesteuerung weiterhin dazu ausgebildet, in Abhängigkeit von einer Eingabe des Monteurs die Sensordaten und/oder Aktordaten, insbesondere ihre aktuellen Messwerte oder Echtzeitwerte, in einer Liste darzustellen. Dabei ist es besonders bevorzugt, dass der Monteur zwischen der Liste und der bildlichen Darstellung wählen kann, oder beide Darstellungen gleichzeitig anzeigen kann. Über eine Verlinkung oder Hinweise in der Liste und/oder dem Bild wird dem Monteur weiterhin bevorzugt eine Zuordnung der Sensordaten und/oder Aktordaten zu den Sensoren und/oder Aktoren im Bild ermöglicht.

Um die Diagnose weiter zu vereinfachen, ist die Gerätesteuerung in einer vorteilhaften Ausführungsform dazu ausgebildet, zumindest einen Teil der Messwerte mit Sollwerten oder Sollbereichen zu vergleichen und als kritischen Zustand zu erfassen, wenn ein Messwert ungleich dem Sollwert oder außerhalb des Sollbereiches angeordnet ist. Besonders bevorzugt ist die Gerätesteuerung dann dazu ausgebildet, den kritischen Zustand akustisch und/oder bildlich, insbesondere durch eine veränderte Farbe der Komponente, durch eine veränderte Farbe des Platzhalters und/oder durch einen Warnhinweis, anzuzeigen. Es kann zudem vorgesehen sein, Hinweise zur Ursache und/oder zur Behebung des kritischen Zustands an der Anzeigeeinheit darzustellen.

Um eine detaillierte Analyse des Antriebssystems zu ermöglichen, umfasst die Benutzerschnittstelle bevorzugt einen Eingabeknopf, wobei die Gerätesteuerung dazu vorgesehen ist, für zumindest einen der in dem Bild oder Gesamtbild dargestellten Sensoren oder Aktoren aktuelle Messwerte solange zu erfassen und im Datenspeicher abzulegen (loggen), solange der Eingabeknopf durch den Monteur betätigt ist. Dabei kann der Eingabeknopf als Button an der Anzeige vorgesehen sein, oder als eine Taste, beispielsweise einer Tastatur. In Abhängigkeit von der Eingabe des Monteurs ist die Gerätesteuerung dabei in einer bevorzugten Ausführungsform weiterhin dazu ausgebildet, den zeitlichen Verlauf der aktuellen Messwerte dieses zumindest einen in dem Bild dargestellten Sensors oder Aktors in kartesischen Koordinaten darzustellen.

In einer besonders bevorzugten Ausführungsform ist die Gerätesteuerung weiterhin dazu ausgebildet,
- entweder einen Aktor des Antriebssystems zu ändern, oder
- eine Änderung eines Aktors des Antriebssystems zu simulieren.
Dadurch kann das Antriebssystem aktiv eingestellt werden und/oder eine Änderung des Antriebssystems simuliert werden. Das Loggen aktueller Messwerte, das heißt das Ablegen der Messwerte in der Datenbank, und/oder das Darstellen des zeitlichen Verlaufes der Messwerte ermöglicht dann eine detaillierte Analyse der durch den Eingriff auf den Aktor verursachten Änderung des Antriebssystems.

Bevorzugt ist der Verbrennungsmotor vom Typ Dieselmotor.

In einer bevorzugten Ausführungsform sieht das Diagnosegerät bei einem Antriebssystem mit einem Diesel- Verbrennungsmotor zum Thema Motorregelung jeweils ein Gesamtbild für den Motorlauf, für den Motorstart sowie für die Motorleistung vor. In allen drei Gesamtbildern wird bevorzugt jeweils der Verbrennungsmotor mit seinem Kühlsystem schematisch dargestellt. In dem Gesamtbild zur Wartung des Motorlaufs werden bevorzugt zudem die Einspritzdüsen schematisch gezeigt. In dem Gesamtbild zur Wartung des Motorstartverhaltens wird zudem bevorzugt eine Batterie dargestellt. in dem Gesamtbild zur Wartung der Motorleistung wird zudem bevorzugt der Kraftstofftank mit dem Kraftstoff, die Luftzufuhr und die Abgasabfuhr mit Turbolader und einem Ausschnitt des Abgasrohres dargestellt. Dadurch können dem Monteur alle jeweils für die Wartung der ausgewählten Komponente benötigten Sensordaten angezeigt werden.

In einer bevorzugten Ausführungsform sieht das Diagnosegerät bei einem Antriebssystem mit einem Diesel- Verbrennungsmotor zum Thema Abgasnachbehandlung ein Gesamtbild für einen SCR Katalysator sowie ein Gesamtbild für die Harnstoffeinspritzung vor. Ausstattungsabhängig ist es weiterhin bevorzugt, dass das Diagnosegerät ein Gesamtbild für die DPF Regeneration bereitstellt. In allen Gesamtbildern zur Abgasnachbehandlung ist es dabei bevorzugt, den Verbrennungsmotor mit seinem Kühlsystem, das Abgasrohr mit dem SCR Katalysator und der Harnstoffeinspritzung, die einen Harnstofftank umfasst, sowie gegebenenfalls den Dieselpartikelfilter mit einem DOC Katalysator schematisch darzustellen. Die Gesamtbilder zur Abgasnachbehandlung sind daher soweit wie möglich gleich.

Dabei ist die vom Monteur ausgewählte Komponente bevorzugt gegenüber den anderen Komponenten des Gesamtbildes hervorgehoben dargestellt. Daher ist in dem Gesamtbild zum Thema SCR Katalysator das Abgasrohr mit dem SCR Katalysator gegenüber dem Verbrennungsmotor und der Harnstoffeinspritzung hervorgehoben. Bei dem Gesamtbild zum Thema Harnstoffeinspritzung ist diese gegenüber dem Verbrennungsmotor und dem Abgasrohr mit seinem Filtern und/oder Katalysatoren hervorgehoben dargestellt. und bei dem Gesamtbild zur DPF Regeneration ist das Abgasrohr mit dem DOC Katalysator, dem Dieselpartikelfilter sowie dem SCR Katalysator gegenüber dem Verbrennungsmotor und dem Harnstoffsystem hervorgehoben dargestellt.

Dadurch erhält der Monteur nicht nur einen besseren Überblick über die Abgasnachbehandlung, sondern diese Darstellung ermöglicht zudem, neben den Sensor- und/oder Aktordaten der ausgewählten Komponente auch die der nicht ausgewählten Komponenten darzustellen.

Weiterhin bevorzugt sieht das Diagnosegerät bei einem Antriebssystem mit einem Diesel-Verbrennungsmotor zum Thema Abgasrückführung ein Gesamtbild vor, in dem schematisch der Verbrennungsmotor mit seinem Kühlsystem, ein Teil des Abgasrohres sowie die das Rohr für die Abgasrückführung dargestellt sind. Dieses Gesamtbild kann in Abhängigkeit von der Ausstattung des Antriebssystems an der Anzeigeeinheit des Diagnosegerätes dargestellt werden, wenn die Abgasrückführung zur Verringerung der Stickoxide an dem Verbrennungsmotor vorgesehen ist.

In einer bevorzugten Ausführungsform sieht das Diagnosegerät bei einem Antriebssystem mit einem Diesel- Verbrennungsmotor zum Thema Einspritzsystem ein Gesamtbild vor, in dem schematisch ein Kraftstofftank mit dem Kraftstoff sowie eine Hochdruckpumpe zur Förderung des Kraftstoffs über ein Hochdruckrohr (Common Rail- Einspritzung) in eine KraftstoffEinspritzdüse dargestellt ist. Vorzugsweise ist in dem Gesamtbild zusätzlich ein Steuergerät, das zur Steuerung und Energieversorgung der Hochdruckpumpe sowie der KraftstoffEinspritzdüse vorgesehen ist, dargestellt. Alternativ dazu kann auch eine Pumpe- Düse-Einspritzung schematisch dargestellt sein.

Die Aufgabe wird weiterhin gelöst mit einer Anordnung umfassend eine landwirtschaftliche Arbeitsmaschine mit einem Verbrennungsmotor, insbesondere vom Typ Dieselmotor, und einem solchen Diagnosegerät. Die Kommunikationsschnittstelle des Diagnosegerätes ist über ein Kabel oder kabellos mit dem Diagnosestecker der landwirtschaftlichen Arbeitsmaschine verbunden. Dadurch hat das Diagnosegerät Zugriff auf einen Motor- Bus der landwirtschaftlichen Arbeitsmaschine, der die Komponenten des Antriebssystems miteinander verbindet. Die Gerätesteuerung ist bevorzugt dazu vorgesehen, einen Status der Komponenten, insbesondere ihrer Sensoren und/oder Aktoren, abzufragen und an der Anzeige des Diagnosegerätes in dem Bild oder Gesamtbild, insbesondere am Ort des ihnen zugeordneten Platzhalters, darzustellen. Weiterhin bevorzugt ist sie dazu ausgebildet, die Aktoren aktiv anzusteuern, um eine dadurch verursachte Änderung des Antriebssystems zu erfassen und/oder auszuwerten. Das Diagnosegerät ermöglicht so eine nahezu vollumfängliche Diagnose des Antriebssystems und/oder des Verbrennungsmotors.

Die Erfindung wird im Folgenden anhand von Figuren erläutert. Die Figuren sind lediglich beispielhaft und schränken den allgemeinen Erfindungsgedanken nicht ein. Es zeigen:
- Fig. 1: verschiedene landwirtschaftliche Arbeitsmaschinen, die an ein erfindungsgemäßes Diagnosegerät anschließbar sind und jeweils ein Antriebssystem aufweisen; und
- Fig. 2: in (a) - (e) jeweils ein an einer Anzeigeeinheit des Diagnosegerätes aus Fig. 1 anzeigbares, themenbezogenes Gesamtbild mit Bildern mehrerer Komponenten eines Antriebssystems einer landwirtschaftlichen Arbeitsmaschine.

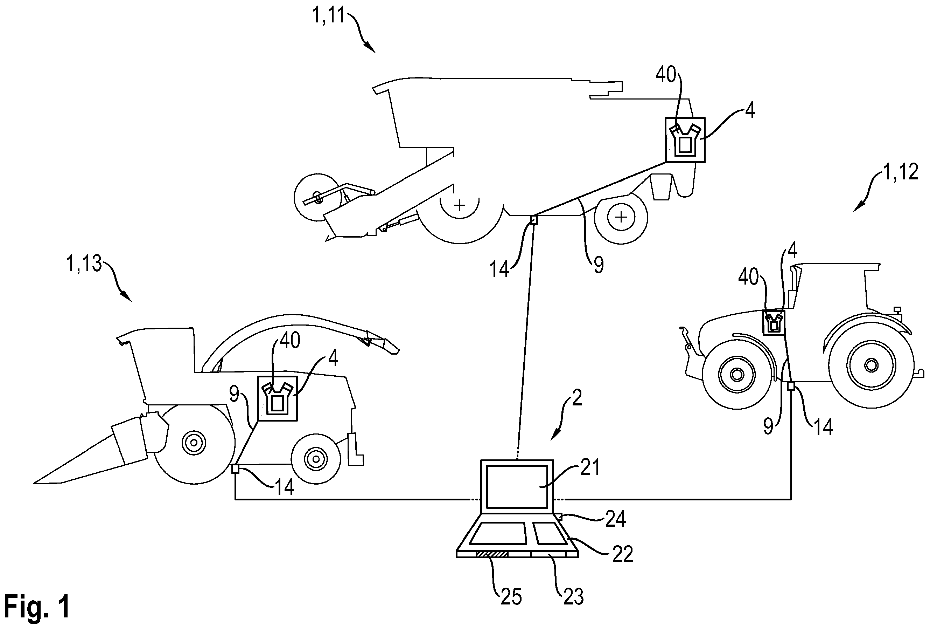

Figur 1 zeigt verschiedene landwirtschaftliche Arbeitsmaschinen 1, die an ein erfindungsgemäßes Diagnosegerät 2 anschließbar sind. Die landwirtschaftlichen Arbeitsmaschinen 1 sind hier ein Mähdrescher 11, ein Traktor 12 und ein Feldhäcksler 13. Jedes dieser landwirtschaftlichen Arbeitsmaschinen 1 weist ein Antriebssystem 4 auf, das einen Verbrennungsmotor 41 umfasst. Die Erfindung umfasst aber auch weitere landwirtschaftliche Arbeitsmaschinen 1 mit einem solchen Antriebssystem 4.

Die landwirtschaftlichen Arbeitsmaschinen 1 weisen jeweils ein Antriebssystem 4 auf, das einen Verbrennungsmotor 41 umfasst. Weiterhin umfasst das Antriebssystem 4 alle für den Verbrennungsmotor 41 erforderlichen Komponenten. Die Komponenten und die im Diagnosegerät 2 dargestellten Bilder 41 - 53 sind im Folgenden mit demselben Bezugszeichen bezeichnet.

Diese Komponenten sind insbesondere ein Einspritzsystem 31, das einen Kraftstofftank 44 umfasst, sowie ein Abgassystem (nicht bezeichnet), das eine Abgasnachbehandlung 33 umfasst. Im Folgenden wird auch der Verbrennungsmotor 41 als eine Komponente 41 - 53 des Antriebssystems 4 bezeichnet.

Um den Verbrennungsmotor 41 optimal steuern zu können, weist das Antriebssystem 4 Sensoren 7 und Aktoren (nicht gezeigt) auf. Die Sensoren 7 ermöglichen eine Vielzahl von Messungen in oder an den Komponenten 41 - 53 des Antriebssystems 4. Mit den Aktoren können im Antriebssystem 4 gezielt Änderungen vorgenommen werden, um auf das Antriebssystem 4, insbesondere auf den Verbrennungsmotor 41, Einfluss zu nehmen.

Die Komponenten 41 - 53 des Antriebssystems 4, insbesondere die Sensoren 7 und die Aktoren, sind dafür über einen Motor- Bus 9 miteinander vernetzt, hier über ein CAN- Bus Netzwerk (Controller Area Network). Zu Versuchs- und Wartungszwecken weisen die landwirtschaftlichen Arbeitsmaschinen 1 hier einen Diagnosestecker 14 auf, der einen direkten Zugriff auf den Motor- Bus 9 ermöglicht.

An die Diagnosestecker 14 der landwirtschaftlichen Arbeitsmaschinen 1 ist ein erfindungsgemäßes Diagnosegerät 2 anschließbar. Dafür weist das Diagnosegerät 2 eine Kommunikationsschnittstelle 24 auf, die zum kabelbehafteten oder kabellosen Verbinden des Diagnosegerätes 2, beispielsweise über ein WLAN- Netzwerk, eine USB- Schnittstelle, ein Ethernet oder ein Mobilfunknetzwerk, mit einer der landwirtschaftlichen Arbeitsmaschinen 1, 11 - 13 vorgesehen ist. Die Kommunikationsschnittstelle 24 wird mit dem Diagnosestecker 14 der landwirtschaftlichen Arbeitsmaschine 1 verbunden. Das Diagnosegerät 2 weist eine Gerätesteuerung 25 auf, die dazu vorgesehen ist, einen Datenaustausch zwischen dem Antriebssystem 4 und dem Diagnosegerät 2 zu steuern.

Das Diagnosegerät 2 weist eine Benutzerschnittstelle auf, die eine Anzeigeeinheit 21 sowie eine Eingabeeinheit 22 umfasst. Es ist zur Wartung von Antriebssystemen 4, die zum Antreiben landwirtschaftlicher Arbeitsmaschinen 1 vorgesehen sind und einen Verbrennungsmotor 41 umfassen, vorgesehen. Weiterhin weist das Diagnosegerät 2 einen Datenspeicher 23 auf, in welchem Bilder 3 und/oder Daten 61 von Antriebssystemen 4 hinterlegt sind.

Zudem sind in dem Datenspeicher 23 Informationen zu den für Antriebssysteme bekannten Kommunikationsprotokollen sowie zu landwirtschaftlichen Arbeitsmaschinen 1 hinterlegt.

Um den Datenaustausch zwischen einem Antriebssystem 4 einer an das Diagnosegerät 2 angeschlossenen oder anschließbaren landwirtschaftlichen Arbeitsmaschine 1 und dem Diagnosegerät 2 zu ermöglichen, wird einem Benutzer (nicht gezeigt) des Diagnosegerätes 2 2, insbesondere einem zur Wartung der landwirtschaftlichen Arbeitsmaschine 1 beauftragter Monteur, eine Liste von landwirtschaftlichen Arbeitsmaschinen 1 angezeigt, von denen der Monteur die angeschlossene oder die zur Wartung und/oder Diagnose vorgesehene landwirtschaftliche Arbeitsmaschine 1 auswählt. Anhand der Auswahl ist die Gerätesteuerung 25 dazu ausgebildet, die für einen Datenaustausch des Diagnosegerätes 2 mit der landwirtschaftlichen Arbeitsmaschine 1 erforderlichen Daten, insbesondere das für den Datenaustausch mit dem Antriebssystem 4 erforderliche Kommunikationsprotokoll, aus einem Datenspeicher 23 des Diagnosegerätes 2 zu laden.

Anhand der Auswahl ist die Gerätesteuerung 25 weiterhin dazu ausgebildet, die der landwirtschaftlichen Arbeitsmaschine 1 zugeordnete Bilder von Komponenten 41 - 53 des Antriebssystems 4 aus dem Datenspeicher 23 des Diagnosegerätes 2 zu laden. Dabei ist die Anzahl und Funktion der Komponenten 41 - 53 von dem jeweiligen Antriebssystem 4, insbesondere vom Typ des Verbrennungsmotors 41, nämlich Dieselmotor oder Benzinmotor, abhängig. Zudem geben die im Datenspeicher 23 zu jeder Komponente 41 - 53 hinterlegten Bilder den Aufbau der Komponente 41 - 53 schematisch wieder.

Dabei werden regelmäßig Bilder mehrerer Komponenten 41 - 53 gleichzeitig in einem Gesamtbild 3 an der Anzeige 21 dargestellt, um dem Monteur einen besseren Überblick zu verschaffen. Solche Gesamtbilder 3 betreffen beispielsweise die Abgasnachbehandlung 33, das Kraftstoff- bzw. Einspritzsystem 31, die Motorregelung (nicht bezeichnet) sowie ausstattungsabhängig eine Abgasrückführung (nicht gezeigt). Die Motorregelung wird hier zudem regelmäßig funktionsabhängig in mehreren Gesamtbildern 3 dargestellt, insbesondere in Gesamtbildern 3 zur Wartung und/oder Analyse der Motorleistung 32, des Motorstartverhaltens 35 und des Motorlaufs (nicht gezeigt).

Wesentlich ist, dass die Bilder 41 - 53 der Komponenten herstellerunabhängig und maschinenunabhängig sind. Das heißt unabhängig vom Hersteller der Komponente und/oder der weiteren Komponenten des Antriebssystems 4 und unabhängig von der landwirtschaftlichen Arbeitsmaschine 1 werden dem Monteur für Komponenten derselben Ausstattung aber verschiedener Hersteller und verschiedener landwirtschaftlicher Arbeitsmaschinen 1 dieselben Bilder 41 - 53 angezeigt. Dadurch ist die Einarbeitung in ein unbekanntes Antriebssystem 4 einer unbekannten landwirtschaftlichen Arbeitsmaschine 1 für den Monteur erheblich vereinfacht.

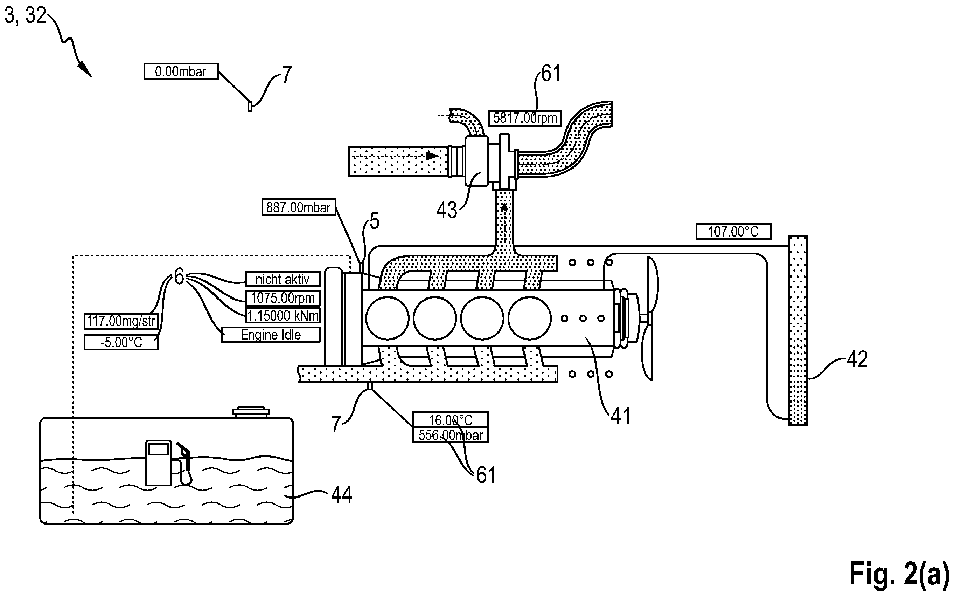

Die Figuren 2 (a) - (e) zeigen jeweils Gesamtbilder 3 für ein Antriebssystem 4 mit einem Verbrennungsmotor 41 vom Typ Dieselmotor. Im Folgenden werden die Begriffe Dieselmotor und Verbrennungsmotor 41 synonym verwendet.

Die Figur 2 (a) zeigt ein Gesamtbild 3 zur Wartung der Motorleistung 32 des Dieselmotors 41. Das Gesamtbild 3 weist Bilder 41 - 53 mehrerer Komponenten des Antriebssystems 4 auf, hier beispielsweise der Komponenten Dieselmotor 41, Temperaturanzeige 42, Kraftstofftank 44 und Turbolader 43. Die Komponenten sind schematisiert dargestellt und für den Fachmann aufgrund ihrer Form unmittelbar erkennbar.

An typischen Positionen des Antriebssystems 4 sind Sensoren 7, die den Zustand des Antriebssystems 4 messen, und/oder Platzhalter 6 für solche Sensoren 7 dargestellt. Die mit den Sensoren 7 gemessenen Messwerte 61 sind am Ort des Platzhalters 6 dargestellt. Sie werden in kontinuierlichen Abständen oder in Echtzeit aktualisiert. Dabei ist die Platzierung der Sensoren 7 im Gesamtbild herstellerunabhängig gleich.

Anhand der gemessenen und am Ort ihres Platzhalters 6 dargestellten Messwerte 61 kann der Monteur den Zustand des Antriebssystems 4, hier die Motorleistung 32 des Dieselmotors 41, erkennen.

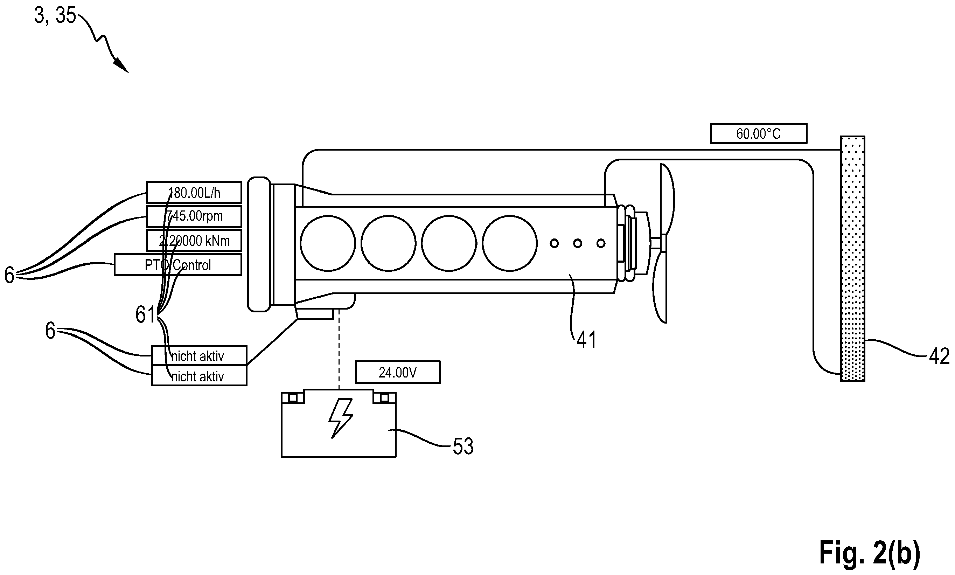

Die Figur 2 (b) zeigt ein Gesamtbild 3 zur Analyse des Motorstartverhaltens 35 des Dieselmotors 41. Das Gesamtbild 3 weist Bilder der Komponenten Dieselmotor 41, Temperaturanzeige 42, und der Batterie 53 auf.

Um in einem Fehlerfall, beispielsweise bei zu niedriger Batteriespannung, die Analyse für den Monteur zu vereinfachen, ist die Gerätesteuerung 25 dazu ausgebildet, den Platzhalter 6 und/oder die darin dargestellten Messwerte 61 farblich verändert darzustellen, und/oder ein akustisches Signal auszugeben, und/oder einen Warnhinweis (nicht gezeigt) in der Anzeigeeinheit 21, insbesondere nahe dem Platzhalter 6, darzustellen.

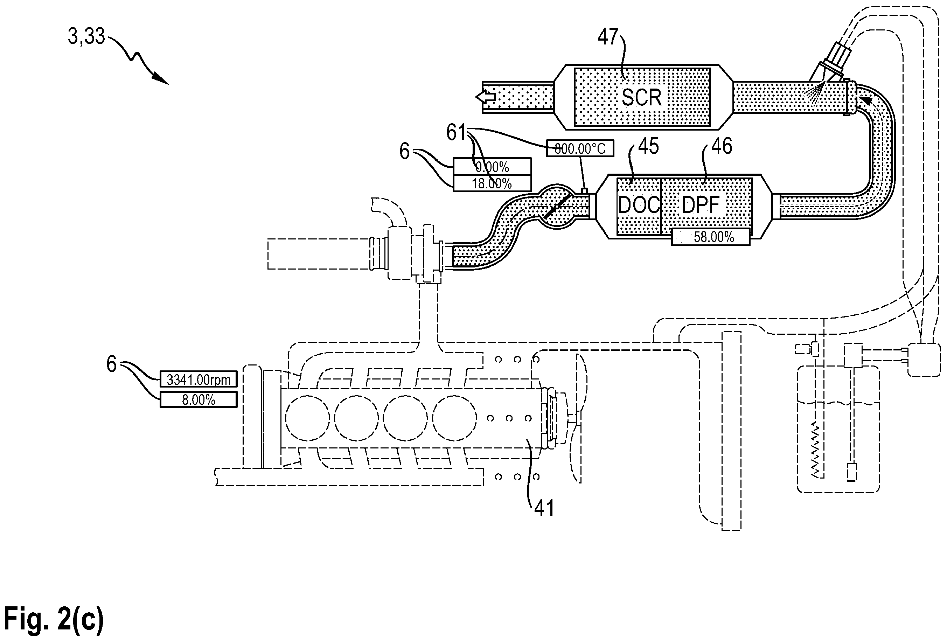

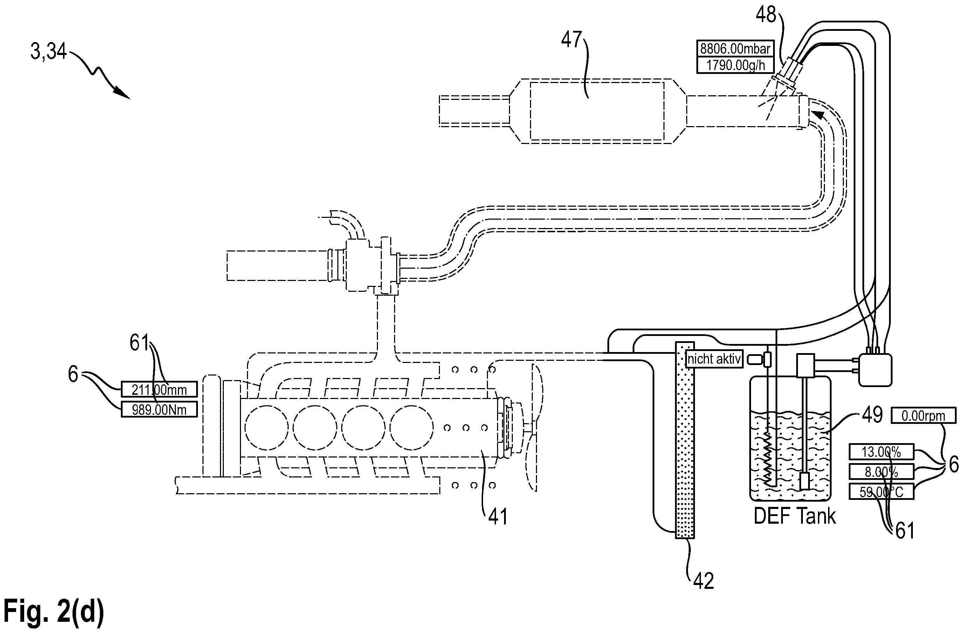

Die Figuren 2 (c) und (d) zeigen jeweils ein Gesamtbild 3 zur Analyse einer Abgasnachbehandlung, wobei sich die Antriebssysteme 4 in Bezug auf die hier gezeigten Abgasnachbehandlungen in ihrer Ausstattung unterscheiden.

In beiden Figuren sind die Komponenten Verbrennungsmotor 41 mit Turbolader 43 und Temperaturanzeige 42, ein Harnstoffsystem 34 mit den Komponenten Harnstofftank 49 und Harnstoff- Einspritzdüse 48, sowie ein Abgassystem dargestellt. Jedoch ist die Ausstattung der Abgassysteme verschieden.

Das Abgassystem 4 der Fig. 2 (c) weist neben einem SCR Katalysator 47 im Gegensatz zum Abgassystem 4 der Fig. 2 (d) noch einen DOC Katalysator 45 sowie einen Dieselpartikelfilter (DPF) 46 auf.

Zudem ist das Gesamtbild 3 der Fig. 2 (c) zur Analyse und Wartung des Dieselpartikelfilters 46 vorgesehen, während das Gesamtbild 3 der Fig. (d) für die Analyse und Wartung des Harnstoffsystems 34 vorgesehen ist.

In beiden Gesamtbildern 3 sind daher die für die jeweilige Analyse wesentlichen Komponenten 41 - 53 gegenüber den übrigen Komponenten 41 - 53 der Abgasnachbehandlung hervorgehoben dargestellt.

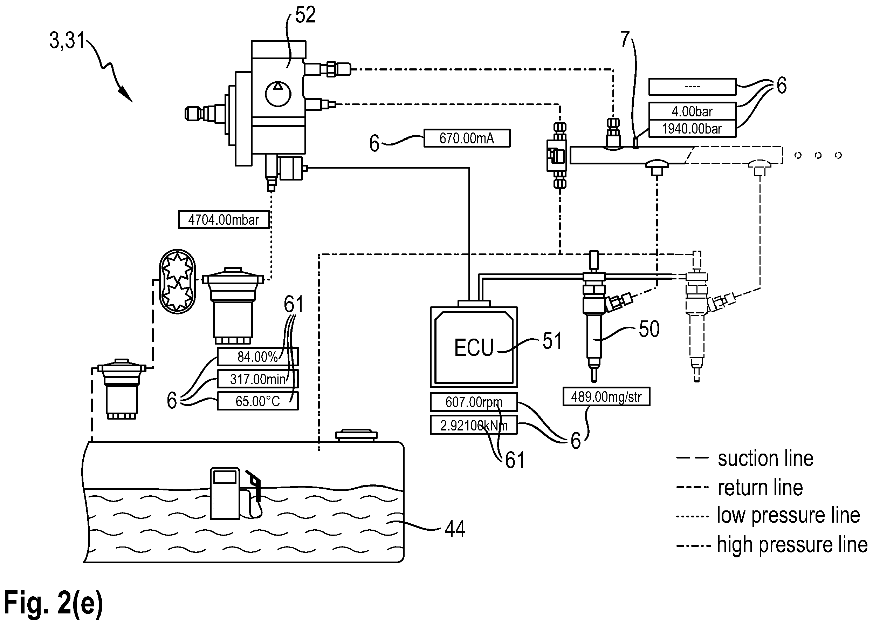

Schließlich zeigt die Fig. 2 (e) ein Gesamtbild 3 zur Analyse des Einspritzsystems 31.

Dargestellt sind hier neben dem Kraftstofftank 44 eine Hochdruckpumpe 52 zur Förderung des Kraftstoffs (nicht bezeichnet) über ein Common Rail (nicht bezeichnet) in eine KraftstoffEinspritzdüse 50. Ein Steuergerät 51 ist für die Steuerung und Energieversorgung der Hochdruckpumpe 52 sowie der Kraftstoff- Einspritzdüse 50 vorgesehen.

In allen Gesamtbildern 3 sind die Komponenten 41 - 53 und die Sensoren 7 herstellerunabhängig platziert, so dass sie für den Monteur leicht auffindbar sind.

Es können neben den Sensoren 7 auch Aktoren dargestellt sein, die einen aktiven Eingriff in das Antriebssystem 4 ermöglichen.

### Bezugszeichenliste

- 1: Landwirtschaftliche Arbeitsmaschine
- 11: Mähdrescher
- 12: Traktor
- 13: Feldhäcksler
- 14: Diagnosestecker
- 2: Diagnosegerät
- 21: Anzeigeeinheit
- 22: Eingabeeinheit
- 23: Datenspeicher
- 24: Kommunikationsschnittstelle
- 25: Gerätesteuerung
- 3: Gesamtbild
- 31: Einspritzsystem
- 32: Motorleistung
- 33: Abgasnachbehandlung, DPF Regeneration
- 34: Harnstoffsystem
- 35: Motorstart
- 4: Antriebssystem
- 41: Komponente, Verbrennungsmotor
- 42: Komponente, Temperaturanzeige
- 43: Komponente, Turbolader
- 44: Komponente, Tank
- 45: Komponente, DOC Katalysator (Diesel oxidation catalyst)
- 46: Komponente, DPR Regenerator (Diesel particulate filter)
- 47: Komponente, SCR Katalysator (Selective catalytic reduction)
- 48: Komponente, Harnstoff- Einspritzdüse
- 49: Komponente, Harnstofftank
- 50: Komponente, Kraftstoff- Einspritzdüse
- 51: Komponente, Steuergerät
- 52: Komponente, Hochdruckpumpe
- 53: Komponente, Batterie
- 6: Platzhalter
- 61: Messwert
- 7: Sensor

## Patentansprüche

1. Diagnosegerät (2) zur Wartung von Antriebssystemen (4), die einen Verbrennungsmotor (41) umfassen, in eine landwirtschaftliche Arbeitsmaschine (1) eingebaut oder einbaubar sind, und zum Antreiben der landwirtschaftlichen Arbeitsmaschine (1) vorgesehen sind, wobei das Diagnosegerät (2)
• eine Gerätesteuerung (25) zur Steuerung des Diagnosegerätes (2),
• eine Benutzerschnittstelle mit einer Anzeigeeinheit (21) und einer Eingabeeinheit (22), sowie
• einen Datenspeicher (23) zum Hinterlegen von Bildern (3, 41 - 53) und/oder Daten (61), umfasst,
wobei die Antriebssysteme (4) jeweils aus einer Vielzahl von funktionalen Komponenten bestehen, deren Anzahl und Funktion von der Ausstattung des jeweiligen Antriebssystems (4), insbesondere vom Typ des Verbrennungsmotors, bestimmt sind, wobei im Datenspeicher (23) zu jeder Komponente ein Bild (41 - 53) hinterlegt ist, welches den Aufbau der Komponente (41 - 53) schematisch wiedergibt, wobei die Gerätesteuerung (25) dazu vorgesehen ist, in Abhängigkeit von einer Eingabe eines Monteurs an der Eingabeeinheit (22) zumindest eine Komponente eines der Antriebssysteme (4) an der Anzeigeeinheit (21) darzustellen,
**dadurch gekennzeichnet, dass**
• das Diagnosegerät (2) herstellerunabhängig, das heißt unabhängig vom Hersteller der Komponente und/oder der weiteren Komponenten des Antriebssystems (4), insbesondere unabhängig vom Hersteller des Verbrennungsmotors (41), und maschinenunabhängig, das heißt unabhängig von der landwirtschaftlichen Arbeitsmaschine (1), nutzbar ist, und
• das dargestellte Bild (41 - 53) der Komponente herstellerunabhängig und maschinenunabhängig ist.

2. Diagnosegerät (2) nach Anspruch 1, **dadurch gekennzeichnet, dass** die Ausstattung des jeweiligen Antriebssystems (4) vom Typ Dieselmotor oder Benzinmotor des Verbrennungsmotors (41) abhängig ist, und/oder von seiner Ausstattung.

3. Diagnosegerät (2) nach einem der vorherigen Ansprüche, **dadurch gekennzeichnet, dass** die Gerätesteuerung (25) dazu ausgebildet ist, gleichzeitig Bilder (41 - 53) von mindestens zwei oder mehr, insbesondere miteinander verbundenen, Komponenten an der Anzeigeeinheit (21) dazustellen, wobei in Abhängigkeit von der Eingabe des Monteurs das Bild (41 - 53) einer ausgewählten Komponente gegenüber dem Bild oder den Bildern (41 - 53) der weiteren Komponenten hervorgehoben dargestellt ist.

4. Diagnosegerät (2) nach einem der vorherigen Ansprüche, **dadurch gekennzeichnet, dass** die Gerätesteuerung (25) dazu ausgebildet ist, Bilder (41 - 53) mehrerer Komponenten in einem themenbezogenen Gesamtbild (3) darzustellen.

5. Diagnosegerät (2) nach einem der vorherigen Ansprüche, **dadurch gekennzeichnet, dass** die Anordnung der Bilder (41 - 53) im Gesamtbild (3) unabhängig von der Anordnung der Komponenten im Antriebssystem (4) ist.

6. Diagnosegerät (2) nach einem der vorherigen Ansprüche, **dadurch gekennzeichnet, dass** in dem Bild (41 - 53) oder Gesamtbild (3) für in der Komponente angeordnete Sensoren (7) und/oder Aktoren jeweils ein Platzhalter (6) vorgesehen ist, wobei die Gerätesteuerung (25) dazu ausgebildet ist, die zu einem Messzeitpunkt erfassten Sensordaten (61) und/oder Aktordaten am Ort des ihrem Sensor (7) oder Aktor zugeordneten Platzhalters (6) in dem Bild (41 - 53) oder Gesamtbild (3) darzustellen.

7. Diagnosegerät (2) nach einem der vorherigen Ansprüche, **dadurch gekennzeichnet, dass** in Abhängigkeit von der Eingabe des Monteurs
• entweder die Gerätesteuerung (25) dazu ausgebildet ist, in dem Datenspeicher (23) hinterlegte, früher erfasste Sensordaten (61) und/oder Aktordaten in dem Bild (41 - 53) oder Gesamtbild (3) darzustellen,
• oder dass das Diagnosegerät (2) eine Kommunikationsschnittstelle (24) zum Datenaustausch mit einem aktuell verbundenen Antriebssystem (4) umfasst, und die Gerätesteuerung (25) dazu ausgebildet ist, über die Kommunikationsschnittstelle (24) aktuell empfangene Sensordaten (61) oder Aktordaten in dem Bild (41 - 53) oder Gesamtbild (3) darzustellen.

8. Diagnosegerät (2) nach einem der vorherigen Ansprüche, **dadurch gekennzeichnet, dass** die im Bild (41 - 53) oder Gesamtbild (3) dargestellten Sensordaten (61) und/oder Aktordaten entweder Referenzwerte, oder zu einem früheren Zeitpunkt gemessene, oder aktuelle, oder Echtzeitwerte, oder statistische Werte sind.

9. Diagnosegerät (2) nach einem der vorherigen Ansprüche, **dadurch gekennzeichnet, dass** die Gerätesteuerung (25) dazu ausgebildet ist, in Abhängigkeit von einer Eingabe des Monteurs die Sensordaten (61) und/oder Aktordaten, insbesondere die aktuellen Messwerte, zudem in einer Liste darzustellen.

10. Diagnosegerät (2) nach einem der vorherigen Ansprüche, **dadurch gekennzeichnet, dass** die Gerätesteuerung (25) dazu ausgebildet ist, zumindest einen Teil der Sensordaten (61) mit Sollwerten oder Sollbereichen zu vergleichen und als kritischen Zustand zu erfassen, wenn ein Sensordatum ungleich dem Sollwert oder außerhalb des Sollbereiches angeordnet ist.

11. Diagnosegerät (2) nach einem der vorherigen Ansprüche, **dadurch gekennzeichnet, dass** die Gerätesteuerung (25) dazu ausgebildet ist, den kritischen Zustand akustisch und/oder bildlich, insbesondere durch eine veränderte Farbe der Komponente, durch eine veränderte Farbe des Platzhalters (6) und/oder durch einen Warnhinweis, anzuzeigen.

12. Diagnosegerät (2) nach einem der vorherigen Ansprüche, **dadurch gekennzeichnet, dass** die Benutzerschnittstelle einen Eingabeknopf umfasst, wobei die Gerätesteuerung (25) dazu vorgesehen ist, für zumindest einen der in dem Bild (41 - 53) oder Gesamtbild (3) dargestellten Sensoren (7) oder Aktoren die aktuellen Messwerte (61) zeitabhängig zu erfassen und im Datenspeicher (23) abzulegen, solange der Eingabeknopf durch den Monteur betätigt ist.

13. Diagnosegerät (2) nach Anspruch 12, **dadurch gekennzeichnet, dass** die Gerätesteuerung (25) dazu ausgebildet ist, in Abhängigkeit von einer Eingabe des Monteurs den zeitlichen Verlauf der aktuellen Messwerte (61) dieses zumindest einen in dem Bild (41 - 53) oder Gesamtbild (3) dargestellten Sensors (7) oder Aktors in kartesischen Koordinaten darzustellen.

14. Diagnosegerät (2) nach einem der vorherigen Ansprüche, **dadurch gekennzeichnet, dass** die Gerätesteuerung (25) dazu ausgebildet ist,
• Entweder einen Aktor des Antriebssystems (4) zu ändern, oder
• Eine Änderung eines Aktors des Antriebssystems (4) zu simulieren.

15. Diagnosegerät (2) nach einem der vorherigen Ansprüche, **dadurch gekennzeichnet, dass** es in der landwirtschaftlichen Arbeitsmaschine (1) angeordnet, oder, insbesondere über die Kommunikationsschnittstelle (24), an die landwirtschaftliche Arbeitsmaschine (1) anschließbar ist.
